# EUROPEAN PATENT APPLICATION

(11) **EP 1 050 221 A1**
(43) Date of publication of application: **08.11.2000**
(21) Application number: 99830274.9
(22) Date of filing: 06.05.1999
(51) Int. Cl.: A23P 1/02, B01J 2/14

(54) **Method for agglomerating powders and apparatus for the implementation thereof**

(71) Applicant: FOOD TECHNOLOGIES S.r.l., 21052 Busto Arsizio (Varese) (IT)
(72) Inventor: Chiappa, Ottorino, c/o Food Technologies S.r.l., 21052 Busto Arsizio, Varese (IT)
(74) Representative: Long, Giorgio

(57) **Abstract**

The present invention relates to a method and the associated apparatus for agglomerating powders, in particular for use in the food industry.

More particularly, the present invention relates to an apparatus for agglomerating powders, comprising means for supplying the powders and means for wetting the powders, said means for supplying the powders comprising an extruder (3,103) and a metering device (4,26) which is arranged above said extruder and substantially in contact therewith, characterized in that said extruder (3,103) has a substantially semi-circular cross-section.

A further aspect of the present invention relates to a method for agglomerating powders, characterized in that the powders are subjected beforehand to a homogeneous and uniform compacting action.

## Description

The present invention relates to a method and the associated apparatus for agglomerating powders, in particular for use in the food and chemical industry.

Agglomerated powders are normally used in the food industry, for example for preparations which can be instantly dissolved in water or milk, such as cocoa, coffee and the like. The methods for obtaining them involve causing the powder to fall through a sieve (or extruder) by means of a star-type rotating metering device located above the sieve and tangential thereto. This metering device is located in the bottom part of a hopper and has a series of radial blades which push the powder, previously loaded into the hopper, through the holes of the sieve. In this way the powder is partly pre-compacted and falls in the form of beads into the underlying part of the apparatus in which nozzles supplying steam are arranged. The beads of pre-compacted powder are therefore moistened by the steam, the flow of which also creates a turbulence so as to cause a change in direction of the vertical flow which becomes substantially horizontal, thus causing the grains to collide with each other. Since the powders used in the food sector usually have a high sugar or salt content, owing to the effect of the steam, a sticky "dissolving film" forms on their external surface, allowing them, during collision with each other, to agglomerate and form granules. These granules are then conveyed to a conveying and air-drying device.

In this way, from the original powder, granules possessing the characteristic feature of a high porosity are formed. When these granules are immersed in a dissolving liquid (water or milk), the liquid penetrates through the internal channels of the granule by means of capillarity. Owing to the effect of the hydrostatic pressure - which is gradually created as the heavier granule reaches the bottom of the container in which the dissolving liquid is contained - the granule "explodes", resulting in the instantaneous and complete dissolving/dispersion of the product.

During application of the method described above we have noted, however, that the agglomerated product is composed of granules with a non-homogeneous shape and size. This fact is generally considered to be undesirable since the market requires a product which has a pleasing appearance and which does not contain a mixture of grains of different shapes and sizes.

The problem underlying the present invention is therefore that of providing a method for agglomerating powders which overcomes the disadvantages of the known art and in particular which is able to provide a granulated product in which the granules which form it have a high degree of homogeneity.

This problem has been solved by a method as claimed in the accompanying claims.

The present invention also relates to an apparatus specifically designed for implementing this method, as claimed in the accompanying claims hereto.

Further characteristic features and advantages of the method and the apparatus for agglomerating powders according to the present invention will emerge more clearly from the description of an example of embodiment, provided hereinbelow by way of a non-limiting example, with reference to the following figures:
Figure 1 shows a perspective sectional view of the apparatus for agglomerating powders according to the present invention;
Figures 2a and 2b show a sectional view in the direction A1 of Figure 1 of a detail of the star-type rotor and the extruder, in two different operating conditions;
Figure 3 shows the view of Figure 2a in accordance with a further embodiment of the present invention;
Figures 4a-4d show the view of Figure 3 in different operating conditions;
Figure 5 shows a sectional side view of an apparatus for agglomerating powders in accordance with a further embodiment of the present invention.

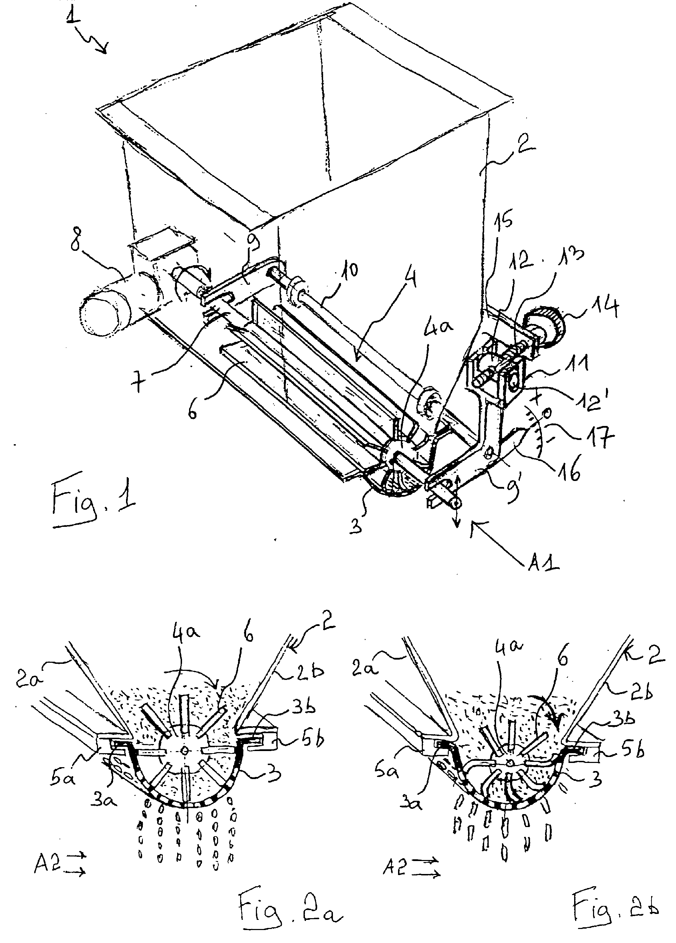

With reference to Figures 1, 2a, 2b and 3, the apparatus for agglomerating powders according to the present invention, which is generally indicated by the number 1, comprises a hopper 2 underneath which an extruder 3 is removably fixed. A star-type rotating metering device 4 is arranged inside the hopper 2, immediately above the extruder 3.

The hopper 2 has, in its bottom section, a front wall 2a and rear wall 2b which partially converge downwards and which terminate in a pair of opposite guides 5a and 5b.

The extruder 3 has a cross-section which is substantially semi-circular and has on its surface holes of a predefined shape and size. Flanges 3a,3b are arranged at the two ends of the semi-circle and run along the whole length of the extruder 3. The flanges 3a,3b are intended to engage with the guides 5a,5b. In this way the extruder 3 may be extracted from the apparatus for periodic cleaning or may be replaced with another extruder having holes of different shapes and sizes.

The extruder 3, as understood for the purposes of the present invention, may consist of metal plate on which the desired holes are formed or, alternatively, of a metal meshwork.

In any case, it is important that the extruder 3 should have an internal surface which is smooth and free from sharp edges for the reasons which will become clear below. Therefore, it will generally undergo a milling process in order to eliminate any internal roughness.

The star-type rotating metering device 4 is composed of a cylindrical body 4a on which blades 6 are radially fixed. The radius of the star-type rotating metering device 4 substantially corresponds to that of the semi-circular extruder 3 so that the blades 6 lightly touch the internal surface of the extruder. The blades 6 are made preferably of resilient material such as, for example, silicone rubber or teflon.

The cylindrical body 4a of the star-type rotating metering device 4 is integral with a shaft 7 which is in turn connected to a motor 8. The motor 8 is slidably supported, in the vertical direction, on the hopper 2. The shaft 7 is slidably supported, outside the hopper 2, by a pair of forked members 9,9' which are arranged in the vicinity of the two ends of the shaft. The forked members 9,9' are fixed to the two ends of a cylindrical rod 10 which is rotatably supported outside the hopper 2. The forked member 9' has an L-shape and is fixed to the rod 10 at the elbow formed by its two perpendicular arms. The forked member 9' terminates, at the opposite end to that where the shaft 7 is supported, in a double-fork seat 11 in which a nut screw 12 is slidably supported by means of lugs 12' which engage with the forks of said seat 11.

A screw 13, terminating at one end in a handwheel 14, is rotatably supported on a bar 15 integral with the hopper 2. The portion of the screw 13 opposite to the handwheel 14 is engaged with the threaded through-hole of the nut screw 12.

The L-shaped forked member 9' has, at the elbow, an arrow indicator 16 extending outwards and terminating opposite a graduated scale 17.

In a preferred embodiment, with reference to Figure 3, the extruder 3 comprises a pair of gate valves 18a,18b which are arranged on the convex external surface of the extruder and extend over the entire length of the extruder itself. Each of the gate valves 18a,18b is fixed, at one end of the extruder 3, to an arm 19 which is hingeably connected, by means of a hinge 20, to the hopper 2. Each of the arms 19 has, at the opposite end to the gate valve 18a,18b, a toothed segment 21 engaging with a screw 22 - only one of which is shown in Figure 3, the other one being hidden by the first screw - terminating at one end in a handwheel 23. The arm 19 has an eyelet 19a of suitable dimensions which allows the shaft 7 to pass through the arm 19 during all the operating stages of the apparatus 1.

The apparatus 1 also comprises steam supply nozzles arranged underneath the extruder 3 and a conveyor onto which the product granules fall and by which they are conveyed to the drying zone. The conveyor comprises a vibrating surface, consisting of a meshwork with very fine meshes, which is inclined in the direction of the drying zone. Hot air is made to flow, from the bottom upwards, underneath this vibrating surface and ensures a first partial drying of the granules. The vibration of the vibrating surface conveys the granules into the actual drying zone.

Both the steam supplying nozzles and the conveyor, which are not shown in the Figures, are of the conventional type in apparatus of this type and will therefore not be described in further detail.

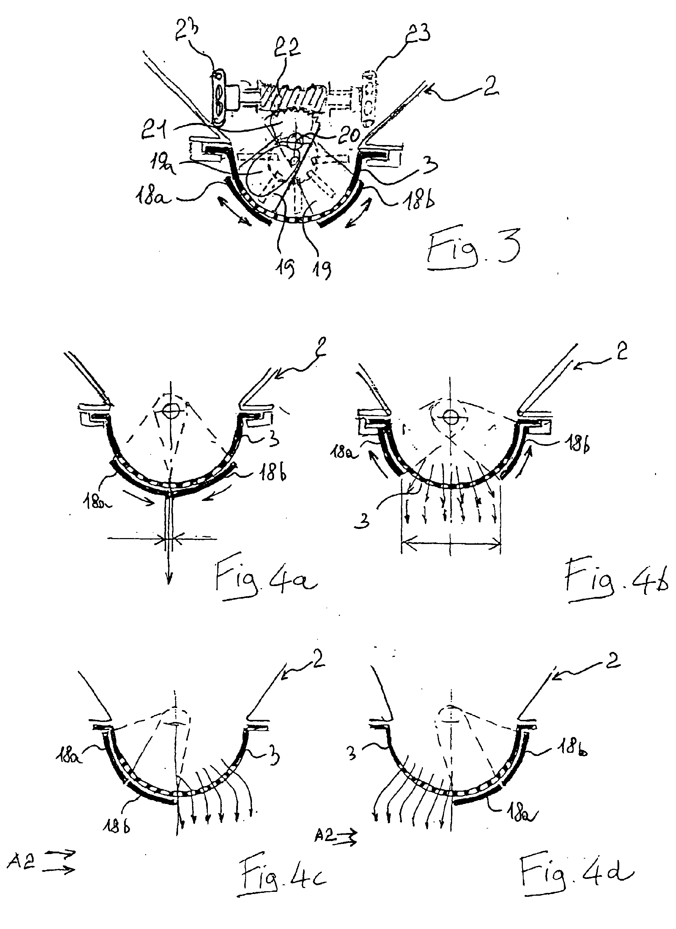

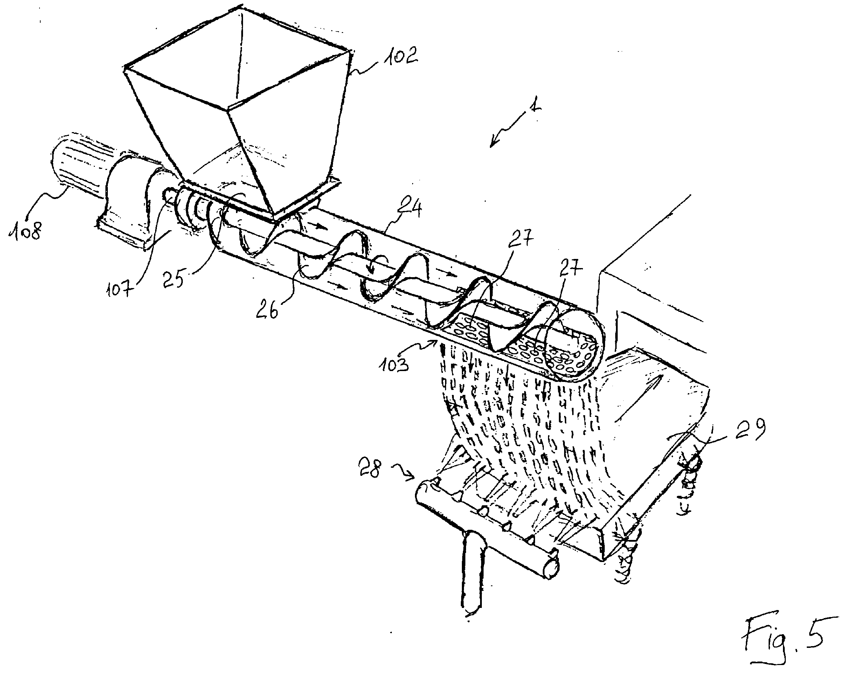

In a second embodiment of the present invention, shown in Figure 5, the apparatus 1 comprises a hopper 102 which is connected to a loading opening 25 of a hollow body 24 which generally has a cylindrical shape. The hollow body 24 houses, inside it, a screw-type rotating metering device 26 which is integral with a shaft 107. The shaft 107 is rotatably supported in a sealed manner on the hollow body 24 in a coaxial position with respect to the axis thereof. The shaft 107 is in turn connected to a motor 108. The hollow body 24 is closed at the opposite end to that which carries the shaft 107. The screw-type rotating metering device 26 has a diameter substantially corresponding to the internal diameter of the hollow body 24.

An extruder 103 with a semi-circular cross-section is arranged on the bottom surface of the hollow body 24, in the section opposite to that to which the hopper 102 is connected. The extruder 103 has a plurality of holes 27 of predefined shape and size. Said extruder 103 is generally made as one piece with the hollow body 24 by simply forming holes 27 on the bottom surface of the hollow body itself. Alternatively, the extruder 103 may be removably fixed to the hollow body 24 by means of guides similar to those described above. It is important that in this case also the internal surface of the extruder 103 should be smooth and free from sharp edges.

Gate valves (not shown in the drawings), which are entirely similar to the gate valves 18a,18b described above, are preferably arranged on the external surface of the hollow body 24, opposite the extruder 103.

In this embodiment also, the apparatus 1 is completed by a plurality of steam supply nozzles 28 and by a conveyor 29.

With reference now to Figures 1, 2a, 2b, 3 and 4a-4d, the operating principle of the apparatus for agglomerating powders according to the present invention will be described.

The powder to be granulated, for example powder prepared for instant chocolate, is loaded into the hopper 2. The star-type rotating metering device 4 is then made to rotate by means of the motor 8. In this way, the blades 6 cause pre-compaction of the powder, which is then supplied from the holes of the extruder in the form of beads of homogeneous shape and size. Falling by means of gravity into the underlying zone of the apparatus, the beads of pre-compacted powder are struck by the steam introduced in the direction A2 and are agglomerated into granules of homogeneous shape and size. The granules then fall onto the conveyor by which they are conveyed away for drying. The operating mode of the apparatus 1 described here refers to that shown in Figure 2a.

If it is required to obtain beads of powder with a greater degree of compactness, depending on the type of product, the centre of gravity of the star-type rotating metering device 4 must be lowered, as shown in Figure 2b. In this way, the blades 6 which, as mentioned, are resilient, perform actual "spreading" of the powder over the extruder 3, exerting a greater pressure on the powder which produces beads of more compact material. It is essential, as mentioned above, that the internal surface of the extruder 3 should be smooth so as to reduce to a minimum the friction and hence the wear of the blades 6.

The mechanism for lowering the centre of gravity of the metering device 4 is as follows. By means of rotation of the handwheel 14, the screw 13 acts on the nut screw 12 which therefore moves in a longitudinal direction with respect to the axis of the screw 13. In turn, the nut screw 12 acts on the double-fork seat 11. In this way, the L-shaped forked member 9', which is integral with the rod 10 and the forked member 9, pivots about the axis of the rod 10 itself. Depending on the direction of rotation of the handwheel 14, lowering or raising of the metering device 4 is thus obtained.

With reference to Figures 4a-4d, the mechanism for opening/closing the gate valves 18a,18b is as follows. The screw 22 is made to rotate by means of the respective handwheel 23. In this way the screw 22 acts on the toothed segment 21 which causes rotation of the arm 19, which is integral with the gate valve 18a, about the axis passing through the hinge 20, in the directions indicated by the arrows. Similarly the gate valve 18b may be operated independently. It is thus possible to reduce to a minimum opening of the extruder 3 (as shown in Figure 4a), reducing to a minimum the throughput of the material supplied. On the other hand, a maximum throughput of material leaving the extruder corresponds to a maximum aperture of the gate valves 18a,18b (Figure 4b). It should be noted that the throughput may also be modified according to the speed of rotation of the star-type rotating metering device 4, whereby an increase in the throughput of material supplied corresponds to an increase in the speed of rotation. In certain cases (depending on the characteristic features of the product) it may in fact be advantageous to reduce the throughput of the beads of pre-compacted powder supplied by the extruder, so as to increase the wettability of the material. Moreover, the combined action of an increase in the speed of rotation of the metering device 4 and a decrease in the supply aperture of the extruder 3 produces greater pre-compaction of the beads of powder.

A further use of the gate valves 18a,18b is shown in Figures 4c and 4d. The gate valves may in fact be arranged alongside each other so as to close off one of the two halves of the extruder 3. In this way the beads of pre-compacted powder may be made to fall at a greater distance (Figure 4c) or smaller distance (Figure 4d) from the source of steam (supplied in the direction A2 in the figures). The choice of the two different solutions will depend on the nature of the product. For example, if the product is light or easily wettable it will be convenient to increase the distance from the source of steam, as shown in Figure 4c, so as to regulate in a suitable manner the degree of wetting.

With reference now to Figure 5, the operating principle of the apparatus 1 according to the second embodiment described above will now be described. The powder is loaded into the hopper 102 from where it is supplied inside the hollow body 24. The screw-type rotating metering device 26 is then made to rotate and conveys the powder towards the opposite end, where the powder is extruded through the holes 27 of the extruder 103. It is obvious that, when the powder is pushed towards the closed end of the hollow body 24, it is compacted. The compaction will therefore be all the greater the greater the speed of rotation of the screw-type rotating metering device 26. In this way it is possible to reach pressures of up to 10 bar inside the hollow body 24. The beads of pre-compacted powder extruded from the extruder 103 are then wetted by the steam supplied by the nozzles 28, with the formation of granules. The granules fall onto the fluidized conveyor 29 and are then conveyed to the drying zone.

On the basis of that which has been stated the advantages of the apparatus for agglomerating powders according to the present invention are immediately obvious if compared with the known art. In particular, use of an extruder with a semi-circular cross-section results in a constant contact between the blades 6 - or the tip of the screw-type metering device 26 - and the internal surface of the extruder itself. This produces beads of material with a homogeneous degree of compaction and a predefined shape and size. On the other hand, the known art, which envisages a flat extruder, allows contact between the blades and the surface of the extruder only at the point of tangency. The result is that it is impossible to supply beads of powder with a homogeneous degree of compaction. This lack of homogeneity has an effect on the shape and the size of the granules: in fact, at the points of the extruder which are furthest from the point of tangency with the blades of the rotating metering device the powder is not subjected to a sufficient pressure to cause pre-compaction of the material and is therefore supplied as such. This powder, after wetting, does not produce homogeneous granules. Moreover, it will be partly dispersed, on account of its lightness, thus decreasing the productivity of the plant. It is obvious that the apparatus described here solves these problems, namely provides an agglomerated product, the granules of which are characterized by a high degree of homogeneity in shape and size, all of this with a productivity of the plant which is greater than that normally obtained with the apparatus of the known art.

Another advantage of the apparatus according to the present invention lies in the possibility of lowering the centre of gravity of the rotating metering device, allowing the blades 6 to exert a great compacting pressure on the powder. In this way it is possible to adapt the apparatus to the different requirements associated with the different nature of the products to be processed.

A further advantage is the possibility of limiting the supply aperture of the extruder by means of the gate valves 18a,18b. In this case also the apparatus may be adapted to different types of powders which must undergo the agglomeration process.

The apparatus described here may be used in all those applications which envisage the formation of an agglomeration from powders in the alimentary, pharmaceutical or detergents industry.

It is obvious that that which has been described here is only a particular embodiment of the apparatus for agglomerating powders according to the present invention, to which the person skilled in the art may be able to make all those modifications necessary for adaptation thereof to particular applications, without thereby departing from the protective scope of the present invention.

For example, it will be possible to envisage a device for lowering the centre of gravity of the screw-type rotating metering device 26, which is entirely similar to that described for the star-type rotating metering device 4, provided that the screw is made of resilient material (silicone rubber or the like) so as to increase the degree of compaction of the powder by means of a "spreading" effect as described above. In this case, the hollow body 24 must have a cross-section which is substantially oval so as to allow the vertical movement of the screw. It will be essential, however, for the bottom surface of the cylinder 24 to have still a semi-circular cross-section.

It is also possible to envisage, for lowering the centre of gravity of the star-type metering device 4 or screw-type metering device 26, mechanisms which are different from that described above. For example, it will be possible to slide the shaft 7, 107 in a vertical direction inside special channels in which stop means (for example notches) at predefined heights are arranged.

Brushes or other similar means may be used, for example, instead of the blades 6.

During wetting, following extrusion, of the beads of pre-compacted powder, atomized water at room temperature may be used instead of the steam.

## Claims

1. Apparatus for agglomerating powders, comprising means for supplying the powders and means for wetting the powders, said means for supplying the powders comprising an extruder (3,103) and a metering device (4,26) arranged above said extruder and substantially in contact therewith, characterized in that said extruder (3,103) has a cross-section which is substantially semi-circular.

2. Apparatus according to Claim 1, in which said metering device is a star-type rotating metering device (4) comprising a cylindrical body (4a) on which blades (6) are radially fixed.

3. Apparatus according to Claim 2, in which the radius of said star-type rotating metering device (4) substantially corresponds to the radius of the semi-circular cross-section of said extruder (3).

4. Apparatus according to Claim 2 or Claim 3, in which said blades (6) are made of resilient material, preferably silicone rubber or teflon.

5. Apparatus according to Claim 4, in which said extruder (3) is removably fixed underneath said star-type rotating metering device (4).

6. Apparatus according to Claim 1, in which said metering device is a screw-type rotating metering device (26).

7. Apparatus according to Claim 6, in which said screw-type rotating metering device (26) is rotatably housed inside a hollow body (24), the bottom surface of said hollow body (24) having a substantially semi-circular cross-section.

8. Apparatus according to Claim 6 or Claim 7, in which said screw-type rotating metering device (26) is made of resilient material, preferably silicone rubber or teflon.

9. Apparatus according to Claim 4 or Claim 8, comprising a device for lowering the centre of gravity of the said metering device (4,26).

10. Apparatus according to Claim 9, in which said device for lowering the centre of gravity of the metering device (4,26) comprises a pivoting L-shaped forked member (9'), the shaft (7,107) of said rotating metering device (4,26) being slidably inserted at one end of said forked member, the opposite end of said L-shaped forked member (9') being connected to a screw (13) / nut screw (12) mechanism, in which the action of said screw (13) on said nut screw (12) allows the forked member (9') to pivot, causing a vertical movement of the shaft (7,107) of said metering device (4,26).

11. Apparatus according to any one of the preceding claims, in which the internal surface of said extruder (3,103) is smooth and free from sharp edges.

12. Apparatus according to any one of the preceding claims, in which said extruder (3,103) comprises gate valves (18a,18b) sliding on the external surface of said extruder so as to vary the supply aperture of the extruder itself.

13. Method for agglomerating powders, characterized in that the powders are subjected beforehand to a homogeneous and uniform compacting action.

14. Method according to Claim 13, comprising the following operating steps:
- providing an apparatus such as that described in the preceding Claims 1-12;
- compacting the powders in a uniform and homogeneous manner until a predefined degree of compaction which is variable from product to product is obtained, by means of said metering device (4,26);
- supplying said pre-compacted powders through said extruder (3,103) by means of said metering device (4,26).

15. Method according to Claim 14, further comprising the following steps:
- wetting said pre-compacted powders so as to cause their agglomeration into granules, said granules having a homogeneous shape and size;
- drying the granules thus obtained.
